# EUROPÄISCHE PATENTSCHRIFT

(11) **EP 4 313 702 B1**
(45) Veröffentlichungstag und Bekanntmachung des Hinweises auf die Patenterteilung: **19.03.2025**
(21) Anmeldenummer: 22718294.6
(22) Anmeldetag: 25.03.2022
(51) Int. Cl.: B60S 9/08, G01L 5/00

(54) **STÜTZWINDE MIT EINEM STÜTZFUSS UND EINEM KRAFTMESSELEMENT**
SUPPORT JACK COMPRISING A SUPPORT FOOT AND A FORCE MEASURING ELEMENT
CRIC DE SUPPORT COMPRENANT UN PIED DE SUPPORT ET UN ÉLÉMENT DE MESURE DE FORCE

(30) Priorität: 25.03.2021 DE 102021001552
(43) Veröffentlichungstag der Anmeldung: 07.02.2024
(73) Patentinhaber: JOST-Werke Deutschland GmbH, 63263 Neu-Isenburg (DE)
(72) Erfinder: ALGÜERA, José Manuel, 63739 Aschaffenburg (DE); SEIDEL, Günter, 64560 Riedstadt (DE)
(74) Vertreter: Straubel, Dirk
(86) Internationale Anmeldenummer: PCT/IB2022/052775
(87) Internationale Veröffentlichungsnummer: WO 2022/201129

(56) Entgegenhaltungen:
- EP-A1- 3 293 062
- DE-A1- 102005 036 139
- DE-A1- 102016 104 592

## Beschreibung

Die Erfindung betrifft eine Stützwinde mit einem Stützfuß und einem Kraftmesselement gemäß der im Oberbegriff des Anspruchs 1 stehenden Merkmale.

Derartige Stützwinden sind häufig an Sattelaufliegern oder allgemein Anhängern angebracht und stützen diese insbesondere in einem vom Zugfahrzeug abgekuppelten Zustand auf dem Untergrund ab. Hierdurch behält der Sattelauflieger in seiner Parkposition eine stabile Lage und kann für ein erneutes Ankuppeln von einem Zugfahrzeug angefahren werden. In anderen Anwendungsfällen sind die Stützwinden am Heck von Silofahrzeugen angeordnet und werden vor dem Einleiten des Kippvorgangs ausgefahren, um das Fahrzeug zu stabilisieren.

Aus der DE 10 2005 036 139 A1 ist eine Stützwinde mit einem Druckelement und einem Stützlastindikator bekannt geworden, welches dem Bediener beim Ausfahren der Stützwinde einen sicheren Stand anzeigt. Das Druckelement umfasst ein Federelement und ein damit zusammenwirkendes Schaltelement in Form eines mechanischen Tasters, wobei das Federelement zwischen einem ortsfest an der Spindel angeordneten Spindelanschlagring und der Spindellagerplatte angeordnet ist. Während eines Ausfahrens der Stützwinde wandert bei einem tragfähigen Untergrund die Spindel gegen die Spindellagerplatte, so dass sich das Federelement verformt und das Schaltelement betätigt. Das Schaltelement wiederum steht mit einem Anzeigeelement in Verbindung, das dem Bediener das Vorliegen einer belasteten Stützwinde anzeigt. Es hat sich jedoch als nachteilig herausgestellt, dass das Federelement nach häufigen Belastungswechseln keine reproduzierbaren Werte liefert und mithin bereits bei einer zu geringen Krafteinleitung das Schaltelement auslöst. Überdies ist mit dem Stützlastindikator keine quantitative Aussage über die von der Stützwinde übertragenen Kräfte möglich.

DE 10 2016 104592 A1 offenbart eine Stützwinde ähnlich dem Oberbegriff des Anspruchs 1.

Folglich lag der Erfindung die Aufgabe zugrunde, eine Stützwinde bereitzustellen, die eine quantitative und reproduzierbare Messung der von der Stützwinde auf den Untergrund übertragenen Kräfte ermöglicht.

Die Aufgabe wird erfindungsgemäß mit den Merkmalen des Anspruchs 1 gelöst. Mit einem an dem Fußaufnahmeelement angebrachten Kraftmesselement lässt sich feststellen, ob ein abzukuppelnder Anhänger sicher abgestellt ist und insbesondere bei einem Sattelauflieger die Stützwinden festen Bodenkontakt haben. Neben dieser qualitativen Feststellung erfolgt auch eine quantitative Feststellung der auf die Stützwinden wirkenden Last. Hierdurch ist es möglich, zusammen mit einer Erfassung der Achslasten auf das Gesamtgewicht des Anhängers zu schließen und hierdurch eine potentielle Überladung oder eine ungleichmäßige Ladungsverteilung zu ermitteln.

Bei dem Fußaufnahmeelement handelt es sich um ein im Kraftfluss zwischen Stützfuß und Innenrohr der Stützwinde angeordnetes Bauteil. Typischerweise ist das Fußaufnahmeelement fest mit dem Innenrohr verbunden, insbesondere verschweißt. Hierdurch ist das Innenrohr an seinem unteren Ende durch das Fußaufnahmeelement zusätzlich ausgesteift.

Unter einem Kraftmesselement wird ein Sensor verstanden, der aus einer Verformung des Fußaufnahmeelementes ein zu der eingeleiteten Kraft proportionales Signal erzeugt. Hierbei handelt es sich beispielsweise um piezoelektrisch arbeitende Sensoren, welche die Änderung der elektrischen Polarisation und somit das Auftreten einer elektrischen Spannung an Festkörpern erfassen, wenn diese elastisch verformt werden. Alternativ können auch kapazitive Sensoren zum Einsatz kommen.

Das Kraftmesselement ist an dem Fußaufnahmeelement angebracht, wobei hierbei eine Befestigung des Kraftmesselementes innerhalb des Fußaufnahmeelementes oder auf der Oberfläche des Fußaufnahmeelementes bevorzugt ist. Allen Befestigungspositionen ist gemein, dass das Kraftmesselement derart mit dem Fußaufnahmeelement verbunden ist, dass es dessen Verformung möglichst präzise erfasst, wobei insbesondere eine kraft-, stoff- und/oder formschlüssige Verbindung geeignet ist, insbesondere durch passgenaues Klemmen oder Klebung. Mittels des Kraftmesselementes ist eine Kraft in Abhängigkeit von der Verformung des Fußaufnahmeelementes ermittelbar.

Gemäß einer ersten bevorzugten Ausführungsform weist das Fußaufnahmeelement einen Hauptkörper, mit dem das Fußaufnahmeelement an dem Innenrohr befestigt ist, und zwei auf gegenüberliegenden Seiten von dem Hauptkörper vorstehende Lagerzapfen auf. Der Hauptkörper kann dabei komplementär zu der inneren Kontur des Innenrohres ausgeformt, von unten in das Innenrohr eingesetzt und vorzugsweise stoffschlüssig mit diesem verbunden sein. In axialer Richtung liegt zumindest ein unterer Abschnitt des Innenrohres überlappend an dem darin eingesetzten Hauptkörper an, wodurch sich insgesamt die Wandstärke im Bereich der vom Stützfuß eingeleiteten Lasten vergrößert. Die Lagerzapfen greifen beispielsweise an dem Hauptkörper an. Besonders bevorzugt ist eine Ausgestaltung, bei der die Lagerzapfen und der Hauptkörper eine einstückig, integrale Baueinheit bilden. Der Stützfuß ist schwenkbeweglich an den Lagerzapfen befestigt.

Gemäß einer zweiten, alternativen Ausführungsform weist das Fußaufnahmeelement ein das Innenrohr seitlich überragendes Achsrohr auf, an welchem der Stützfuß schwenkbeweglich befestigt ist. Das Achsrohr kann ein Hohlkörper oder ein Vollkörper sein. Das Innenrohr kann zur Aufnahme des Achsrohrs mit entsprechenden, zueinander fluchtenden Durchbrüchen versehen sein. Ebenso ist es möglich, das Achsrohr in separate Lagerhülsen einzusetzen, die wiederum fest mit dem Innenrohr verbunden sind und zueinander fluchten. Die Lagerhülsen können in Durchbrüche des Innenrohrs eingesetzt oder von unten mit dem stirnseitigen Ende des Innenrohrs verbunden sein.

Das Kraftmesselement kann dann an dem Hauptkörper, an einem der Lagerzapfen oder dem Achsrohr angebracht sein.

Das Kraftmesselement kann insbesondere stiftförmig ausgebildet und in eine komplementär ausgeformte Ausnehmung des Fußaufnahmeelementes spielfrei oder unter Vorspannung eingesetzt sein.

Besonders zweckmäßig ist eine Ausführungsform, bei der das stiftförmig ausgebildete Kraftmesselement ein Messdübel und die Ausnehmung eine Messdübelbohrung ist, in welche der Messdübel eingesetzt ist. Unter einem Messdübel wird ein in Querrichtung kraftempfindlicher Sensor verstanden, der typischerweise mit einer zylindrischen Form ausgebildet und in eine komplementär ausgeformte Messdübelbohrung in dem zu messenden Bauteil stets oder zumindest bei Vorliegen der zu erwartenden Betriebslast passgenau und/oder unter Vorspannung eingesetzt ist. Die Vorspannung des Messdübels wird beispielsweise mittels einer in den Messdübel integrierten Klemmvorrichtung realisiert. Der Durchmesser der Messdübelbohrung beträgt typischerweise 6,00 mm bis 10,00 mm, besonders bevorzugt 8 mm.

Gemäß einer besonders sinnvollen Ausgestaltung ist der Messdübel in der Messdübelbohrung mechanisch verspannt. Hierdurch lässt sich der Messdübel für Wartungs- und Reparaturzwecke aus der Messdübelbohrung entfernen und wieder einsetzten. Ein Austausch des Messdübels wäre mit einer vergossenen oder verklebten Verbindung innerhalb der Messdübelbohrung mit weitaus größerem Aufwand verbunden.

Günstigerweise ist die Ausnehmung in einem der Lagerzapfen oder dem Achsrohr angeordnet. Beide Bauteile nehmen unmittelbar die vom Stützfuß übertragenden Kräfte aus und unterliegen dadurch unter Last einer Formänderung, die mittels des stiftförmig ausgebildeten Kraftmesselementes erfasst wird.

Vorteilhafterweise ist die Ausnehmung in axialer Richtung des Lagerzapfens oder des Achsrohrs ausgerichtet. Hieraus resultiert der Vorteil, dass das stiftförmig ausgebildete Kraftmesselement bei einem auf dem Untergrund stehenden Stützfuß einer Biegebeanspruchung des Lagerzapfens oder Achsrohrs ausgesetzt und eine besonders präzise Erfassung der auf die Stützwinde wirkenden Kraft möglich ist. Die Messgenauigkeit lässt sich noch weiter verbessern, wenn die Ausnehmung exzentrisch zur Mittelachse des Lagerzapfens oder Achsrohrs, auf einer dem Außen- und/oder Innenrohr abgewandten Seite angeordnet ist. In diesem Bereich erfährt der Lagerzapfen oder das Aschsrohr eine Streckung, deren Betrag mit zunehmender Exzentrizität wächst, wodurch die Messgenauigkeit weiter verbessert ist.

Zweckmäßigerweise ist die Ausnehmung an einer Stirnseite des Lagerzapfens oder des Achsrohrs als Sackloch ausgeformt. Hierdurch ist es möglich, das stiftförmig ausgebildete Kraftmesselement in einem Bereich der größten eingeleiteten Kräfte zu positionieren, ohne den Lagerzapfen oder das Achsrohr durch eine unnötig lange Ausnehmung zu schwächen.

Vorteilhafterweise ist das stiftförmig ausgebildete Kraftmesselement in das Bohrlochtiefste des Sacklochs eingesetzt. Hieraus resultiert eine besonders geschützte Montageposition des stiftförmig ausgebildeten Kraftmesselementes.

Der Stützfuß kann eine Standplatte aufweisen, an welcher zwei seitlich des Innenrohrs emporragende Wandabschnitte angeformt sind, in denen eine Lageröffnung zur Aufnahme der Lagerzapfen oder des Achsrohrs ausgebildet ist, wobei zumindest ein Abschnitt des stiftförmig ausgebildeten Kraftmesselementes zwischen dem benachbarten Wandabschnitt und einer nach unten projizierten Ebene des Innenrohres angeordnet ist. Der Kraftfluss erfolgt von dem Stützfuß über die Wandabschnitte auf die Lagerzapfen oder das Achsrohr und von dort gegebenenfalls über den Hauptkörper auf das Innenrohr. In einem Bereich zwischen dem Wandabschnitt und dem Innenrohr beziehungsweise dessen Verlängerung nach unten vollzieht der mittels des stiftförmig ausgebildeten Kraftmesselementes zu überwachende Lagerzapfen oder das Achsrohr die größte Verformung, welche besonders präzise Messungen des stiftförmig ausgebildeten Kraftmesselementes ermöglicht.

Gemäß einer weiteren, alternativen Ausführungsform ist das Kraftmesselement eine Dehnungs-Messstreifen-Applikation. Die Dehnungs-Messstreifen-Applikation dient zur Erfassung von dehnenden und stauchenden Verformungen des Fußaufnahmeelementes. Sie ändert schon bei geringen Verformungen ihren elektrischen Widerstand und wird als Dehnungssensor eingesetzt. Typischerweise ist die Dehnungs-Messstreifen-Applikation auf das sich unter Belastung minimal verformende Fußaufnahmeelement geklebt. Dessen Verformung unter Last führt dann zur Veränderung des elektrischen Widerstands der Dehnungs-Messstreifen-Applikation.

Bevorzugt ist eine Anbringung der Dehnungs-Messstreifen-Applikation auf einer Ober- und/oder Unterseite des Hauptkörpers. Hieraus resultiert einerseits der Vorteil, dass keine Schwächung des Fußaufnahmeelementes durch Bohrungen oder Ausfräsungen vorzunehmen sind und andererseits, dass auf der Oberseite und Unterseite des Hauptkörpers eine Dehnung oder Stauchung vorliegt und dadurch besonders exakte und reproduzierbare Messwerte erzielbar sind. Da sich die Dehnungs-Messstreifen-Applikation regelmäßig auf der Oberfläche des zu überwachenden Bauteils befindet, ist eine Anbringung an dem Hauptkörper insbesondere an dessen geschützt im Innenrohr angeordneten Oberseite bevorzugt.

Alternativ zu der vorstehend beschriebenen Ausführungsform kann die Dehnungs-Messstreifen-Applikation auf dem Achsrohr aufgebracht sein und dessen Verformung unter Last erfassen.

Zum besseren Verständnis wird die Erfindung nachfolgend anhand von sechs Figuren näher erläutert. Es zeigen die
- **Fig. 1:**: einen Längsschnitt durch eine Stützwinde mit einem daran gelagerten Stützfuß;
- **Fig. 2:**: einen um 90° gedrehten Längsschnitt durch den unteren Abschnitt der Stützwinde gemäß Fig. 1 mit einem Kraftmesselement gemäß einer ersten Ausführungsform;
- **Fig. 3:**: eine Seitenansicht auf den unteren Abschnitt der Stützwinde gemäß Fig. 1;
- **Fig. 4:**: einen schematischen Längsschnitt durch eine Stützwinde mit einem Kraftmesselement gemäß einer zweiten Ausführungsform;
- **Fig. 5:**: einen schematischen Längsschnitt durch eine Stützwinde mit einem Kraftmesselement gemäß einer dritten Ausführungsform und
- **Fig. 6:**: einen schematischen Längsschnitt durch eine Stützwinde mit einem Kraftmesselement gemäß einer vierten Ausführungsform.

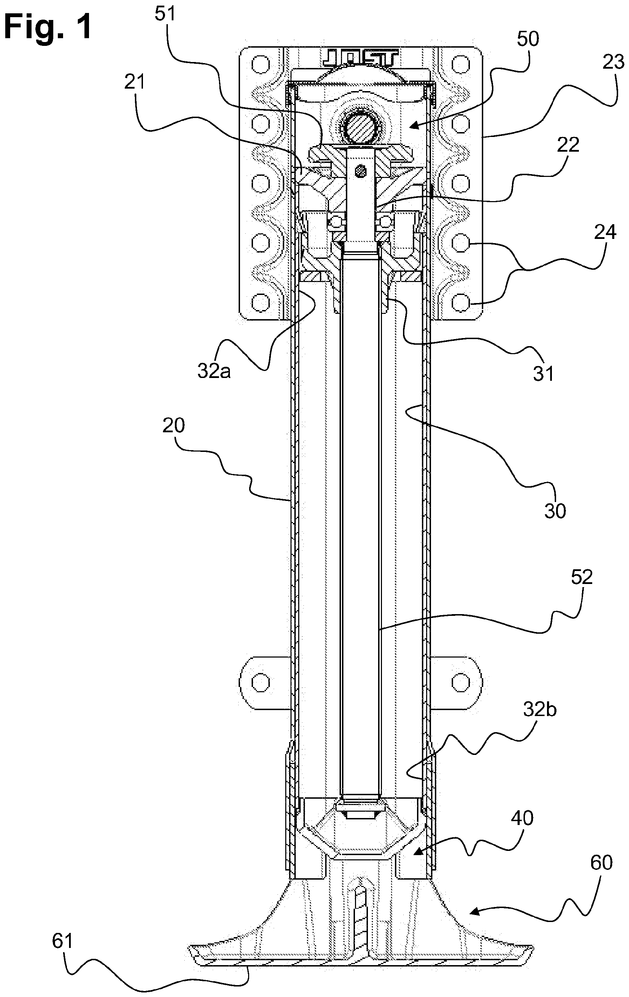

Die Fig. 1 zeigt einen Längsschnitt einer Stützwinde mit einem Außenrohr 20 in Form eines Vierkantprofils und einem axial darin geführten Innenrohr 30. Aufgrund der komplementären Profilform von Außen- und Innenrohr 20, 30 ist das Innenrohr 30 in Umfangsrichtung drehfest in dem Außenrohr 20 gehalten.

Für eine Befestigung der Stützwinde an einem Fahrzeug ragt beidseitig des Außenrohrs 20 eine Montageflanschplatte 23 hervor, in welcher in diskreten Abständen Montagelöcher 24 eingebracht sind. Das Innenrohr 30 trägt an seinem unteren Ende einen Stützfuß 60, mit welchem die Stützwinde bei ausgefahrenem Innenrohr 30 auf dem Untergrund aufsteht.

In dem Außenrohr 20 ist eine Getriebeanordnung 50 mit einer gegenüber dem Außenrohr 20 drehbar gelagerten Spindel 52 und einem Zahnrad 51 angeordnet, welches an einem oberen Endabschnitt der Spindel 52 drehfest mit dieser verbunden ist. Durch eine Drehung der Spindel 52 wandert eine an einem oberen Abschnitt 32a des Innenrohrs 30 fest eingesetzte Spindelmutter 31 je nach Drehsinn entweder nach unten oder nach oben. Bei einer Bewegung der Spindelmutter 31 nach unten, drückt sie das Innenrohr 30 nebst daran befestigtem Stützfuß 60 in Richtung Untergrund und die Stützwinde wird ausgefahren. Bei einer Bewegung der Spindelmutter 31 nach oben, hebt sie das Innenrohr 30 nebst Stützfuß 60 an und die Stützwinde wird eingefahren.

Die Spindel 52 durchläuft eine unter dem Zahnrad 51 angeordnete Spindellagerplatte 21, welche mit einer Spindelöffnung 22 ausgebildet ist, deren Innendurchmesser nur geringfügig größer als der Außendurchmesser der Spindel 52 gewählt ist. Mit Hilfe der Spindellagerplatte 21 und der Spindelöffnung 22 ist die Spindel 52 in ihrer radialen Richtung gelagert. Die Spindellagerplatte 21 ist mindestens an drei Seiten, bevorzugt an vier Seiten, fest mit der Innenwand des Außenrohrs 20 verbunden. Die Spindellagerplatte 21 ist im Wesentlichen orthogonal zu der Erstreckung des Außenrohrs 20 ausgerichtet. Die Spindel 52 und die zugehörige Spindelöffnung 22 in der Spindellagerplatte 21 sind mittig in dem Außenrohr 20 untergebracht.

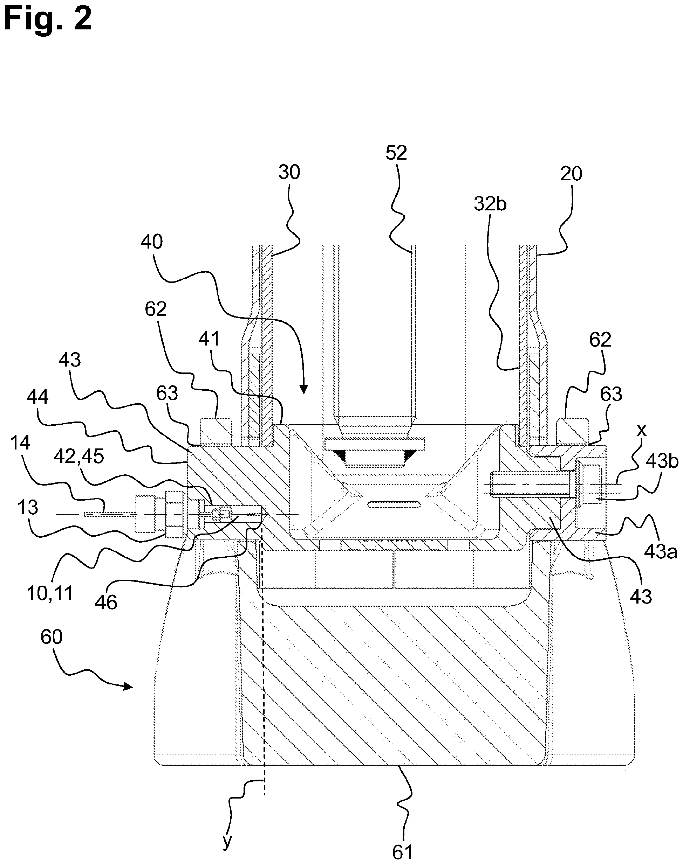

In der Fig. 2 ist ein unterer Abschnitt 32b des Innenrohrs 30 mit dem daran befestigten Stützfuß 60 dargestellt. Der Stützfuß 60 ist schwenkbar an einem Fußaufnahmeelement 40 gelagert, welches wiederum ortsfest im Bereich des unteren Abschnitts 32b an dem Innenrohr 30 festgelegt ist. In dem gezeigten Ausführungsbeispiel weist das Fußaufnahmeelement 40 einen Hauptkörper 41 und zwei an gegenüberliegenden Seiten bezüglich des Innenrohrs 30 vorstehende Lagerzapfen 43 auf. Die Lagerzapfen 43 ragen unter dem Innenrohr 30 und/oder Außenrohr 20 seitlich nach außen.

Der Hauptkörper 41 ist mit einer zur Innenkontur des Innenrohrs 30 komplementären Form ausgebildet, stirnseitig von unten in das Innenrohr 30 eingesetzt und mit diesem dauerhaft verbunden. In der maximal angehobenen Position des Innenrohrs 30 stoßen die Lagerzapfen 43 stirnseitig gegen das Außenrohr 20. Typischerweise überlappt der Hauptkörper 41 zumindest teilweise von innen das Innenrohr 30 und ragt nach unten aus diesem heraus.

Der Stützfuß 60 umfasst eine im Wesentlichen ebene Standplatte 61, an der zwei senkrecht aufstehende Wandabschnitte 62 angeformt sind. Zwischen den beiden Wandabschnitten 62 ist das Innenrohr 30 und das Außenrohr 20 angeordnet. Jeder Wandabschnitt 62 weist eine zueinander fluchtende Lageröffnung 63 auf, durch welche die Lagerzapfen 43 des Fußaufnahmeelementes 40 hindurchreichen, wobei der in der Bildebene rechte Lagerzapfen 43 für eine vereinfachte Montage des Stützfußes 60 an dem Fußaufnahmeelement 40 zweiteilig aufgebaut ist und ein lösbares Montageendstück 43a aufweist, welches mittels einer Schraube 43b an dem Lagerzapfen 43 befestigt ist. Im montierten Zustand des Stützfußes 60 an dem Fußaufnahmeelement 40 schwingt der Stützfuß 60 um eine Mittelachse x der Lagerzapfen 43.

In eine Stirnseite 44 von einem der beiden Lagerzapfen 43 ist eine parallel zur Mittelachse x verlaufende Ausnehmung 42 eingebracht, die beispielsweise eine Messdübelbohrung 42 sein kann. In dem vorliegenden Ausführungsbeispiel ist die Ausnehmung 42 als Sackloch 45 ausgebildet, dessen Bohrlochtiefstes 46 bis zu einer sich nach unten erstreckenden, projizierten Ebene y in Verlängerung des Innenrohres 30 verläuft. In die Ausnehmung 42 ist ortsfest ein Kraftmesselement 10 in Form eines stiftförmig ausgebildeten Kraftmesselementes 10, insbesondere eines Messdübels 11, eingesetzt und innerhalb der Ausnehmung 42 gegenüber dem zugehörigen Lagerzapfen 43 verspannt.

Die Lage des stiftförmig ausgebildeten Kraftmesselementes 10 befindet sich im Bereich zwischen dem nächstgelegenen Wandabschnitt 62 und dem Bohrlochtiefsten 46. Bei einem gegenüber dem Außenrohr 20 ausgefahrenen Innenrohr 30 und auf dem Untergrund aufstehendem Stützfuß 60 erfolgt ein Kraftfluss von dem Stützfuß 60 über die Lagerzapfen 43 auf das Innenrohr 30. Hierdurch unterliegt der Lagerzapfen 43 zwischen dem Wandabschnitt 62 und dem Hauptkörper 41 einer Biegebeanspruchung und es kommt zu einer verhältnismäßig großen Verformung, welche eine präzise Messung mittels des stiftförmig ausgebildeten Kraftmesselementes 10 ermöglicht und dessen Messwert einer entsprechenden Stützlast zuordbar ist.

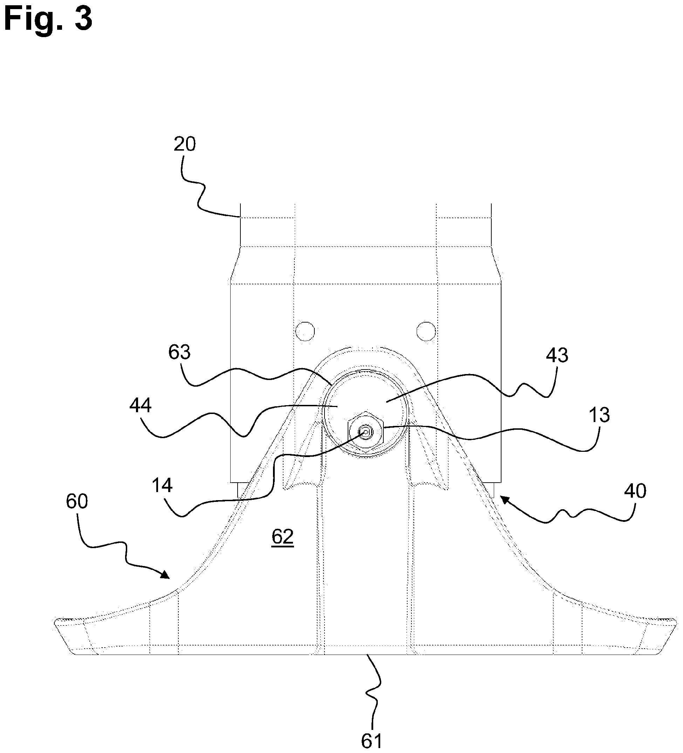

In Fig. 3 ist besonders gut ein seitliches Überlappen des Wandabschnittes 62 mit dem Außenrohr 20 und dem Innenrohr 30 in eingefahrener Position der Stützwinde zu erkennen. In ausgefahrener Position der Stützwinde überlappen die Wandabschnitte 62 lediglich mit dem Innenrohr 30.

Sowohl die Fig. 2 als auch die Fig. 3 lassen die exzentrische Ausrichtung des Kraftmesselementes 10 innerhalb des Lagerzapfens 43 erkennen. Aufgrund der Biegebeanspruchung unter Last befindet sich das Kraftmesselement 10 auf einer der Standplatte 61 zugewandten Seite des Lagerzapfens 43, welcher mit zunehmender Exzentrizität zur Mittelachse x einer größeren Streckung unterliegt.

In ein offenes Ende der Ausnehmung 42 ist eine Übergangskupplung 13 eingesetzt, mit deren Hilfe die Ausnehmung 42 nach außen verschlossen ist und durch welche lediglich eine Anschlussleitung 14 aus der Ausnehmung 42 herausgeführt ist. Über die Anschlussleitung 14 ist das Kraftmesselement 10 elektrisch an ein Bordnetzwerk eines hier nicht gezeigten Fahrzeugs angeschlossen, aus welchem das Kraftmesselement 10 mit elektrischer Energie versorgt ist. Überdies stellt das Kraftmesselement 10 Messsignale der Kraftmessung über die Anschlussleitung 14 dem Fahrzeug zur Verfügung.

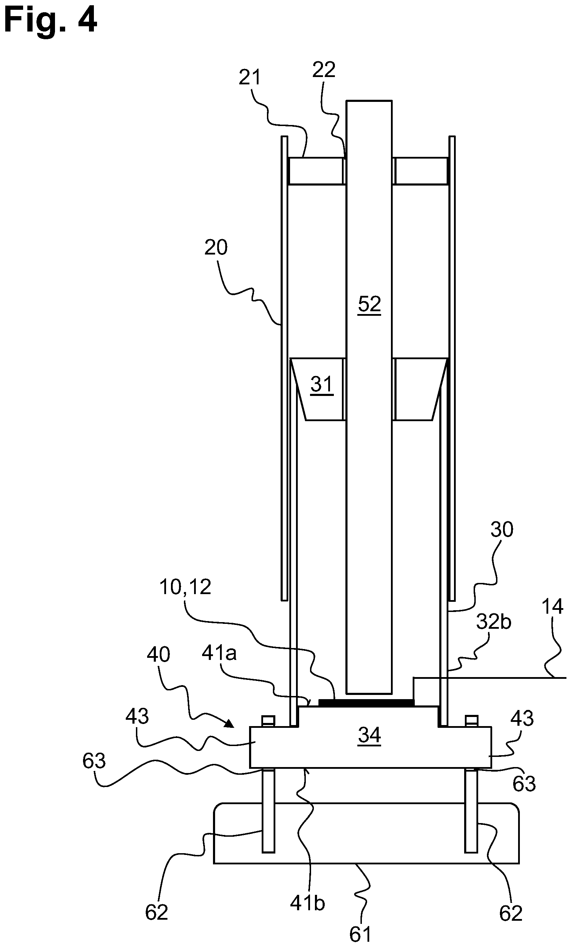

Die Fig. 4 stellt eine alternative Ausführungsform mit einem Kraftmesselement 10 in Form einer Dehnungs-Messstreifen-Applikation 12 dar. Die Dehnungs-Messstreifen-Applikation 12 ist vorzugsweise auf einer Oberseite 41a des Hauptkörpers 41 aufgebracht und befindet sich in einer geschützten Position innerhalb der Kontur des Innenrohres 30. Prinzipiell wäre es auch möglich, die Dehnungs-Messstreifen-Applikation 12 auf einer Unterseite 41b des Hauptkörpers 41 anzubringen, welche jedoch im Fahrbetrieb erheblichen Umwelteinflüssen ausgesetzt ist.

Die Dehnungs-Messstreifen-Applikation 12 ist mittels einer Anschlussleitung 14 an das Energie- und Datensystem eines hier nicht gezeigten Fahrzeugs anschließbar.

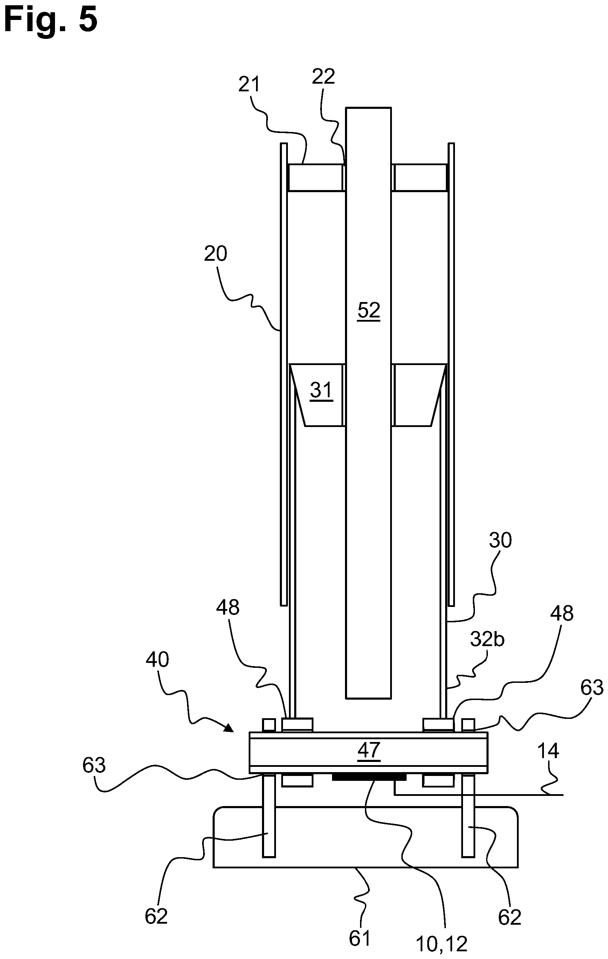

In der Fig. 5 ist eine weitere Ausführungsform der Stützwinde dargestellt, bei welcher das Fußaufnahmeelement 40 ein Achsrohr 47 umfasst. Bei dem Achrohr 47 handelt es sich um ein durchgehendes Bauteil mit kreisrundem Querschnitt. Das Achsrohr 47 läuft unter gegenüberliegenden Wandabschnitten des Innenrohres 30 hindurch und steht seitlich bezüglich des Innenrohrs 30 soweit vor, dass die Lageröffnungen 63 der Wandabschnitte 62 ebenfalls von dem Achsrohr 47 durchstoßen sind. Der Stützfuß 60 ist schwenkbeweglich an dem Achrohr 47 gelagert.

Zur Aussteifung des unteren Abschnitts 32b des Innenrohres 30 und zur Reduzierung der Flächenpressung in diesem Bereich, sind an dem Innenrohr 30 miteinander fluchtende Lagerhülsen 48 fest angebracht, durch welche das Achsrohr 47 hindurchgeführt ist. Die axiale Ausrichtung beider Lagerhülsen 48 erfolgt im Wesentlichen rechtwinklig zu der axialen Erstreckung des Innenrohres 30.

Auf die Oberfläche des Achsrohres 47 ist ein Kraftmesselement 10 in Form einer Dehnungs-Messstreifen-Applikation 12 aufgebracht. Bei dem vorliegenden Ausführungsbeispiel befindet sich die Dehnungs-Messstreifen-Applikation 12 auf einer der Standplatte 61 des Stützfußes 60 zugewandten Seite des Achsrohres 47. Besonders bevorzugt ist eine Anordnung der Dehnungs-Messstreifen-Applikation 12 zwischen den Wandabschnitten des Innenrohres 30, insbesondere zwischen den beiden zueinander beabstandeten Lagerhülsen 48.

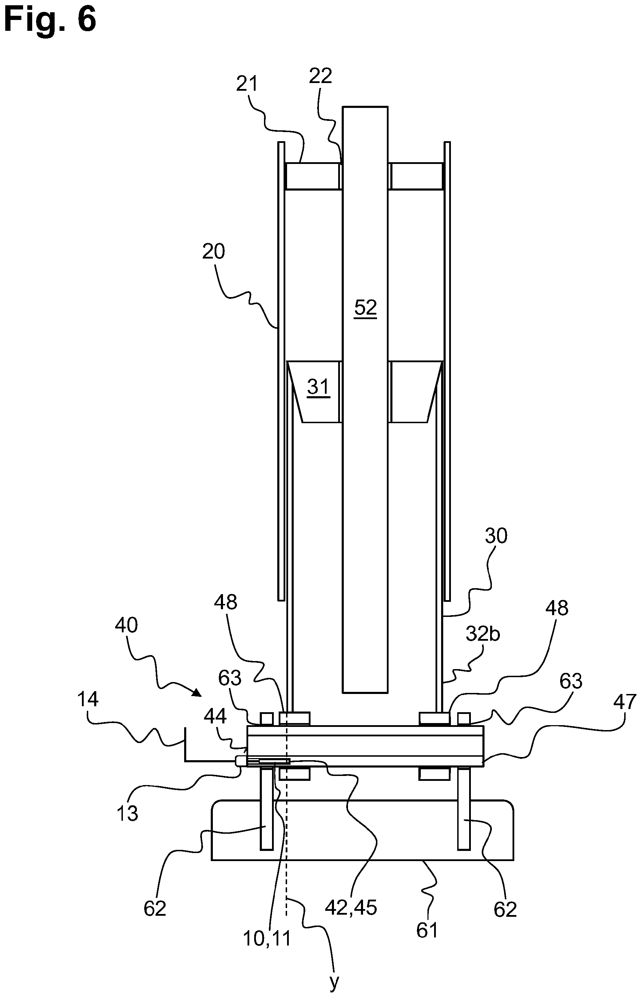

Die Fig. 6 zeigte ein weiteres Ausführungsbeispiel der Erfindung mit einem Fußaufnahmeelement in Form eines Achsrohrs 47, dessen Wandstärke eine ausreichende Dicke aufweist, um darin eine Ausnehmung 42, insbesondere eine Messdübelbohrung 42, vorzusehen. In die Ausnehmung 42 ist ein stiftförmig ausgebildetes Kraftmesselement 10, insbesondere ein Messdübel 11, eingesetzt und darin wiederlösbar verspannt. Die Ausnehmung 42 befindet sich auf einer Seite des Achsrohrs 47, die der Standplatte 61 zugewandt ist.

Überdies mündet die Ausnehmung 42, die ebenfalls als Sackloch 45 ausgebildet ist, an der Stirnseite 44 des Achsrohrs 47 und endet mit ihrem Bohrlochtiefsten 46 in Überdeckung mit der benachbarten Lagerhülse 48. Insofern ist auch bei diesem Ausführungsbeispiel zumindest ein Abschnitt des stiftförmig ausgebildeten Kraftmesselementes 10 zwischen dem Wandabschnitt 62 des Stützfußes 60 und einer projizierten Ebene y in Verlängerung des Innenrohrs 30 angeordnet.

### Bezugszeichenliste

- 10: Kraftmesselement
- 11: stiftförmiges Kraftmesselement, Messdübel
- 12: Dehnungs-Messstreifen-Applikation
- 13: Übergangskupplung
- 14: Anschlussleitung

- 20: Außenrohr
- 21: Spindellagerplatte
- 22: Spindelöffnung Spindellagerplatte
- 23: Montageflanschplatte
- 24: Montagelöcher

- 30: Innenrohr
- 31: Spindelmutter
- 32a: oberer Abschnitt Innenrohr
- 32b: unterer Abschnitt Innenrohr

- 40: Fußaufnahmeelement
- 41: Hauptkörper
- 41a: Oberseite Hauptkörper
- 41b: Unterseite Hauptkörper
- 42: Ausnehmung, Messdübelbohrung
- 43: Lagerzapfen
- 43a: Montageendstück
- 43b: Schraube
- 44: Stirnseite Lagerzapfen/Achsrohr
- 45: Sackloch
- 46: Bohrlochtiefstes
- 47: Achsrohr
- 48: Lagerhülsen Achsrohr

- 50: Getriebeanordnung
- 51: Zahnrad
- 52: Spindel

- 60: Stützfuß
- 61: Standplatte
- 62: Wandabschnitt
- 63: Lageröffnung

- x: Mittelachse Lagerzapfen
- y: projizierte Ebene

## Patentansprüche

1. Stützwinde mit einem Stützfuß (60) und einem Kraftmesselement (10), wobei die Stützwinde ein Außenrohr (20) sowie ein darin verschiebbar gelagertes Innenrohr (30) aufweist und der Stützfuß (60) mittels eines Fußaufnahmeelementes (40) schwenkbeweglich an dem Innenrohr (30) befestigt ist, wobei das Kraftmesselement (10) an dem Fußaufnahmeelement (40) angebracht ist,
**dadurch gekennzeichnet,**
**dass** mittels des Kraftmesselementes (10) eine Kraft in Abhängigkeit von der Verformung des Fußaufnahmeelementes (40) ermittelt ist.

2. Stützwinde nach Anspruch 1, **dadurch gekennzeichnet, dass** das Fußaufnahmeelement (40) einen Hauptkörper (41), mit dem das Fußaufnahmeelement (40) an dem Innenrohr (30) befestigt ist, und zwei auf gegenüberliegenden Seiten von dem Hauptkörper (41) vorstehende Lagerzapfen (43) aufweist.

3. Stützwinde nach Anspruch 1, **dadurch gekennzeichnet, dass** das Fußaufnahmeelement (40) ein das Innenrohr (30) seitlich überragendes Achsrohr (47) aufweist, an welchem der Stützfuß (60) schwenkbeweglich befestigt ist.

4. Stützwinde nach Anspruch 2 oder 3, **dadurch gekennzeichnet, dass** das Kraftmesselement (10) an dem Hauptkörper (41), an einem der Lagerzapfen (43) oder dem Achsrohr (47) angebracht ist.

5. Stützwinde nach einem der Ansprüche 1 bis 4, **dadurch gekennzeichnet, dass** das Kraftmesselement (10) stiftförmig ausgebildet und in eine komplementär ausgeformte Ausnehmung (42) des Fußaufnahmeelementes (40) spielfrei oder unter Vorspannung eingesetzt ist.

6. Stützwinde nach Anspruch 5, **dadurch gekennzeichnet, dass** das stiftförmig ausgebildete Kraftmesselement (10) ein Messdübel (11) und die Ausnehmung (42) eine Messdübelbohrung (42) ist, in welche der Messdübel (11) eingesetzt ist.

7. Stützwinde nach Anspruch 5 oder 6 soweit auf Anspruch 2 oder 3 rückbezogen, **dadurch gekennzeichnet, dass** die Ausnehmung (42) in einem der Lagerzapfen (43) oder dem Achsrohr (47) angeordnet ist.

8. Stützwinde nach Anspruch 7, **dadurch gekennzeichnet, dass** die Ausnehmung (42) in axialer Richtung des Lagerzapfens (43) oder des Achsrohrs (47) ausgerichtet ist.

9. Stützwinde nach Anspruch 7 oder 8, **dadurch gekennzeichnet, dass** die Ausnehmung (42) exzentrisch zu einer Mittelachse (x) des Lagerzapfens (43) oder des Achsrohrs (47), auf einer dem Außen-und/oder Innenrohr (20, 30) abgewandten Seite angeordnet ist.

10. Stützwinde nach einem der Ansprüche 7 bis 9, **dadurch gekennzeichnet, dass** die Ausnehmung (42) an einer Stirnseite (44) des Lagerzapfens (43) oder des Achsrohrs (47) als Sackloch (45) ausgeformt ist.

11. Stützwinde nach Anspruch 10, **dadurch gekennzeichnet, dass** das stiftförmig ausgebildete Kraftmesselement (10) in das Bohrlochtiefste (46) des Sacklochs (45) eingesetzt ist.

12. Stützwinde nach einem der Ansprüche 7 bis 11, **dadurch gekennzeichnet, dass** der Stützfuß (60) eine Standplatte (61) aufweist, an welcher zwei seitlich des Innenrohrs (30) emporragende Wandabschnitte (62) angeformt sind, in denen eine Lageröffnung (63) zur Aufnahme der Lagerzapfen (43) oder des Achsrohrs (47) ausgebildet ist, wobei zumindest ein Abschnitt des stiftförmig ausgebildeten Kraftmesselementes (10) zwischen dem benachbarten Wandabschnitt (62) und einer nach unten projizierten Ebene (y) des Innenrohres (30) angeordnet ist.

13. Stützwinde nach einem der Ansprüche 1 bis 4, **dadurch gekennzeichnet, dass** das Kraftmesselement (10) eine Dehnungs-Messstreifen-Applikation (12) ist.

14. Stützwinde nach Anspruch 13, **dadurch gekennzeichnet, dass** die Dehnungs-Messstreifen-Applikation (12) auf einer Ober- und/oder Unterseite (41a, 41b) des Hauptkörpers (41) aufgebracht ist.

15. Stützwinde nach Anspruch 13 soweit auf Anspruch 3 rückbezogen, **dadurch gekennzeichnet, dass** die Dehnungs-Messstreifen-Applikation (12) auf dem Achsrohr (47) aufgebracht ist.

## Claims

1. A support jack comprising a support foot (60) and a force measuring element (10), wherein the support jack has an outer tube (20) and an inner tube (30) movably mounted therein, and the support foot (60) is pivotably secured to the inner tube (30) by means of a foot receiving element (40), wherein the force measuring element (10) is attached to the foot receiving element (40),
**characterized in that,**
a force is determined by means of the force measuring element (10) as a function of the deformation of the foot receiving element (40).

2. The support jack according to claim 1, **characterized in that** the foot receiving element (40) has a main body (41), with which the foot receiving element (40) is fastened to the inner tube (30), and two bearing pins (43) projecting on opposite sides of the main body (41).

3. The support jack according to claim 1, **characterized in that** the foot receiving element (40) has an axle tube (47) which projects laterally beyond the inner tube (30) and to which the support foot (60) is pivotally attached.

4. The support jack according to claim 2 or 3, **characterized in that** the force measuring element (10) is attached to the main body (41), to one of the bearing pins (43) or the axle tube (47).

5. The support jack according to one of claims 1 to 4, **characterized in that** the force measuring element (10) is pin-shaped and is inserted into a complementary shaped recess (42) of the foot receiving element (40) without play or under prestress.

6. The support jack according to claim 5, **characterized in that** the pin-shaped force measuring element (10) is a measuring dowel (11) and the recess (42) is a measuring dowel bore (42) into which the measuring dowel (11) is inserted.

7. The support jack according to claim 5 or 6 as far as referred to claim 2 or 3, **characterized in that** the recess (42) is arranged in one of the bearing pins (43) or the axle tube (47).

8. The support jack according to claim 7, **characterized in that** the recess (42) is aligned in the axial direction of the bearing pin (43) or the axle tube (47).

9. The support jack according to claim 7 or 8, **characterized in that** the recess (42) is arranged eccentrically to a center axis (x) of the bearing pin (43) or the axle tube (47), on a side facing away from the outer and/or inner tube (20, 30).

10. The support jack according to one of claims 7 to 9, **characterized in that** the recess (42) is formed as a blind hole (45) on a front side (44) of the bearing pin (43) or the axle tube (47).

11. The support jack according to claim 10, **characterized in that** the pin-shaped force measuring element (10) is inserted into the borehole deepest (46) of the blind hole (45).

12. The support jack according to one of claims 7 to 11, **characterized in that** the support foot (60) has a base plate (61), on which two wall sections (62) are formed projecting laterally with respect to the inner tube (30), wherein a bearing opening (63) is formed in the wall sections (62) for receiving the bearing pins (43) or the axle tube (47), at least a section of the pin-shaped force measuring element (10) being arranged between the adjacent wall section (62) and a downwardly projected plane (y) of the inner tube (30).

13. The support jack according to one of claims 1 to 4, **characterized in that** the force measuring element (10) is a strain gauge application (12).

14. The support jack according to claim 13, **characterized in that** the strain gauge application (12) is applied to an upper and/or lower side (41a, 41b) of the main body (41).

15. The support jack according to claim 13 as far as referred to claim 3, **characterized in that** the strain gauge application (12) is applied to the axle tube (47).

## Revendications

1. Treuil d'appui comprenant un pied d'appui (60) et un élément de mesure de force (10), dans lequel le treuil d'appui présente un tube extérieur (20) ainsi qu'un tube intérieur (30) monté de manière coulissante dans celui-ci et le pied d'appui (60) est fixé de manière à pouvoir pivoter sur le tube intérieur (30) au moyen d'un élément de réception de pied (40), dans lequel l'élément de mesure de force (10) est fixé sur l'élément de réception de pied (40), **caractérisé en ce qu'**une force est déterminée au moyen de l'élément de mesure de force (10) en fonction de la déformation de l'élément de réception de pied (40).

2. Treuil d'appui selon la revendication 1, **caractérisé en ce que** l'élément de réception de pied (40) présente un corps principal (41) par lequel l'élément de réception de pied (40) est fixé au tube intérieur (30), et deux tourillons de palier (43) faisant saillie sur des côtés opposés du corps principal (41).

3. Treuil d'appui selon la revendication 1, **caractérisé en ce que** l'élément de réception de pied (40) présente un tube axial (47) dépassant latéralement du tube intérieur (30), tube sur lequel le pied de support (60) est fixé de manière pivotante.

4. Treuil d'appui selon la revendication 2 ou 3, **caractérisé en ce que** l'élément de mesure de force (10) est monté sur le corps principal (41), sur l'un des tourillons de palier (43) ou sur le tube d'axe (47).

5. Treuil d'appui selon l'une des revendications 1 à 4, **caractérisé en ce que** l'élément de mesure de force (10) est réalisé en forme de tige et est inséré dans un évidement (42) de forme complémentaire de l'élément de réception de pied (40) sans jeu ou sous précontrainte.

6. Treuil d'appui selon la revendication 5, **caractérisé en ce que** l'élément de mesure de force (10) en forme de tige est une cheville de mesure (11) et l'évidement (42) est un perçage de cheville de mesure (42) dans lequel la cheville de mesure (11) est insérée.

7. Treuil d'appui selon la revendication 5 ou 6, dans la mesure où elle est rattachée à la revendication 2 ou 3, **caractérisé en ce que** l'évidement (42) est disposé dans l'un des tourillons de palier (43) ou dans le tube axial (47).

8. Treuil d'appui selon la revendication 7, **caractérisé en ce que** l'évidement (42) est orienté dans la direction axiale du tourillon de palier (43) ou du tube d'axe (47).

9. Treuil d'appui selon la revendication 7 ou 8, **caractérisé en ce que** l'évidement (42) est disposé de manière excentrique par rapport à un axe médian (x) du tourillon (43) ou du tube axial (47), sur un côté opposé au tube extérieur et/ou intérieur (20, 30).

10. Treuil d'appui selon l'une des revendications 7 à 9, **caractérisé en ce que** l'évidement (42) est formé en trou borgne (45) sur une face frontale (44) du tourillon (43) ou du tube d'axe (47).

11. Treuil d'appui selon la revendication 10, **caractérisé en ce que** l'élément de mesure de force (10) réalisé en forme de tige est inséré dans la partie la plus profonde (46) du trou borgne (45).

12. Treuil d'appui selon l'une des revendications 7 à 11, **caractérisé en ce que** le pied de support (60) présente une plaque de support (61) sur laquelle sont formés deux tronçons de paroi (62) qui dépassent latéralement du tube intérieur (30) et dans lesquels est formée une ouverture de palier (63) pour recevoir les tourillons de palier (43) ou le tube d'axe (47), dans lequel au moins une section de l'élément de mesure de force (10) de forme rigide est disposée entre la partie de paroi adjacente (62) et un plan projeté vers le bas (y) du tube intérieur (30).

13. Treuil d'appui selon l'une des revendications 1 à 4, **caractérisé en ce que** l'élément de mesure de force (10) est une application de jauge de contrainte (12).

14. Treuil d'appui selon la revendication 13, **caractérisé en ce que** l'application de jauge de contrainte (12) est appliquée sur une face supérieure et/ou inférieure (41a, 41b) du corps principal (41).

15. Treuil d'appui selon la revendication 13, dans la mesure où elle est rattachée à la revendication 3, **caractérisé en ce que** l'application de jauge de contrainte (12) est appliquée sur le tube d'axe (47).
